# EUROPÄISCHE PATENTSCHRIFT

(11) **EP 2 946 449 B1**
(45) Veröffentlichungstag und Bekanntmachung des Hinweises auf die Patenterteilung: **13.02.2019**
(21) Anmeldenummer: 14700539.1
(22) Anmeldetag: 13.01.2014
(51) Int. Cl.: H02B 1/20

(54) **KAMMLEISTE ZUM ORDNEN VON ELEKTRISCHEN LEITUNGEN**
COMB BAR FOR ARRANGING ELECTRICAL CONDUCTORS
PEIGNE POUR ORGANISER DES CONDUCTEURS ÉLECTRIQUES

(30) Priorität: 16.01.2013 DE 102013001007
(43) Veröffentlichungstag der Anmeldung: 25.11.2015
(73) Patentinhaber: Friedrich Lütze GmbH, 71366 Weinstadt-Grossheppach (DE)
(72) Erfinder: ERKER, Hubert, 73333 Gingen (DE); LANG, Jürgen, 71640 Ludwigsburg (DE); GHIZELEA, Virgil, 70372 Stuttgart (DE)
(74) Vertreter: Bartels und Partner, Patentanwälte
(86) Internationale Anmeldenummer: PCT/EP2014/000056
(87) Internationale Veröffentlichungsnummer: WO 2014/111245

(56) Entgegenhaltungen:
- DE-A1-102008 023 189
- JP-U- S5 625 884
- US-A1- 2005 001 108

## Beschreibung

### Kammleiste zum Ordnen von Leitungen, insbesondere zum Ordnen und Fixieren von elektrischen Leitungen in Schaltschränken

Die Erfindung betrifft eine Kammleiste zum Ordnen von Leitungen, insbesondere zum Ordnen und Fixieren von elektrischen Leitungen in Schaltschränken, mit den Merkmalen im Oberbegriff von Anspruch 1.

In der industriellen Steuerungstechnik werden elektrische oder sonstige Einrichtungen häufig in sogenannten Schaltschränken oder Schaltkästen angeordnet. Die einzelnen Einrichtungen können auf Tragschienen, wie beispielsweise einer Hutschiene, angeordnet und aneinander gereiht werden. Anschließend werden die Einrichtungen verdrahtet, wobei eine Kammleiste an dem die Tragschiene aufweisenden Montagesteg angebracht ist, um die Verbindungsleitungen der Einrichtungen zu ordnen.

Aus der DE 103 14 937 A1 ist eine bewährte Kammleiste bekannt, bei der an biegesteifen Zähnen angeordnete Zungen federelastisch auslenkbar sind und dadurch Haltestellen für die zu ordnenden Leitungen bilden.

Die US 2005/0001108 A1 beschreibt eine Kammleiste zum Ordnen von Leitungen, insbesondere zum Ordnen und Fixieren von elektrischen Leitungen in Schaltschränken, wobei die Kammleiste einen Leistenabschnitt und eine Vielzahl von Zinken aufweist, zwischen denen jeweils mindestens ein Aufnahmeraum für die zu ordnenden Leitungen gebildet ist, und wobei die Zinken an einem mit dem Leistenabschnitt verbundenen Grundabschnitt angeordnete Begrenzungsmittel aufweisen, die den Aufnahmeraum begrenzen, wobei der Grundabschnitt der Zinken gegenüber dem Leistenabschnitt federelastisch auslenkbar ist zum Einführen einer Leitung in den Aufnahmeraum, wobei mindestens ein erster Teil einander zugeordneter Begrenzungsmittel zweier benachbarter Zinken versetzt zueinander an den einander zugewandten Flächen der benachbarten Zinken angebracht ist, so dass beim Auslenken benachbarter Zinken die Endflächen dieser Begrenzungsmittel aneinander vorbei bewegbar sind, und wobei ein zweiter Teil der Begrenzungsmittel die Form einer Lamelle aufweist.

Weitere Kabelbefestigungsmittel gehen aus der JP S56-25884 U und der DE 10 2008 023 189 A1 hervor.

Der vorliegenden Erfindung liegt die Aufgabe zugrunde, eine Kammleiste bereitzustellen, die noch weiter verbesserte Gebrauchseigenschaften aufweist, insbesondere vielseitig einsetzbar ist und dabei dennoch einfach in der Handhabung und Montage ist.

In einer Ausführungsart ist die Aufgabe durch die im Anspruch 1 bestimmte Kammleiste gelöst. Besondere Ausführungsarten der Erfindung sind in den Unteransprüchen bestimmt.

Gemäß dem Kennzeichen von Anspruch 1 ist vorgesehen, dass die in einem Aufnahmeraum einander zugeordneten Lamellen benachbarter Zinken keinen Versatz zueinander aufweisen und auf beiden Seiten eines Grundabschnitts einer Zinke an übereinstimmenden Positionen von dem Grundabschnitt abstehen.

In einer Ausführungsart betrifft die Erfindung eine Kammleiste zum Ordnen von Leitungen, insbesondere zum Ordnen und Fixieren von elektrischen Leitungen in Schaltschränken, wobei die Kammleiste einen Leistenabschnitt und eine Vielzahl von Zinken aufweist, zwischen denen jeweils mindestens ein Aufnahmeraum für die zu ordnenden Leitungen gebildet ist. Die Zinken weisen an einem mit dem Leistenabschnitt verbundenen Grundabschnitt angeordnete Begrenzungsmittel auf, die den Aufnahmeraum begrenzen. Der Grundabschnitt der Zinken ist gegenüber dem Leistenabschnitt federelastisch auslenkbar zwecks Einführen einer Leitung in den Aufnahmeraum. Mindestens ein erster Teil einander zugeordneter Begrenzungsmittel zweier benachbarter Zinken ist versetzt zueinander an den einander zugewandten Flächen der Grundabschnitte der benachbarten Zinken angeordnet, so dass beim Auslenken benachbarter Zinken die Endflächen dieser ersten Begrenzungsmittel aneinander vorbei bewegbar sind. Werden die Zinken ausgelenkt, stehen sie schräg zum Leistenabschnitt; ansonsten erstrecken sie sich quer zu dem Leistenabschnitt.

Dadurch sind auch Leitungen mit einem großen Durchmesser in den Aufnahmeraum einführbar, insbesondere auch dann, wenn in einem benachbarten Aufnahmeraum bereits Leitungen eingesetzt sind oder der benachbarte Aufnahmeraum bereits vollständig mit Leitungen gefüllt ist. Hierzu können die Grundabschnitte der Zinken ausgelenkt werden, ohne dass die ersten Begrenzungsmittel benachbarter Zinken aneinanderstoßen und einen Anschlag für die Auslenkung des Grundabschnitts bilden. Der erste Teil der Begrenzungsmittel, die nachfolgend auch als erste Begrenzungsmittel bezeichnet werden, kann schräg und insbesondere quer zu einer Längsachse des Grundabschnitts der Zinken von diesem Grundabschnitt abstehen.

In einer Ausführungsart ist der erste Teil der Begrenzungsmittel biegesteif und insbesondere nockenförmig ausgebildet. Dadurch bildet der erste Teil der Begrenzungsmittel einen mechanisch stabilen Abschluss des Aufnahmeraums. Der erste Teil der Begrenzungsmittel ist beim Einführen einer Leitung in den Aufnahmeraum nicht oder jedenfalls nicht wesentlich verformbar. Das von dem Leistenabschnitt wegweisende Ende des ersten Teils der Begrenzungsmittel und/oder das dem Leistenabschnitt zugewandte Ende des ersten Teils der Begrenzungsmittel kann verrundet ausgebildet sein, um das Einführen einer Leitung in den Aufnahmeraum und/oder das Entnehmen einer Leitung aus dem Aufnahmeraum zu vereinfachen oder um eine Beschädigung der Leitung zu verhindern.

In einer Ausführungsart weist der erste Teil der Begrenzungsmittel einen übereinstimmenden Abstand zu dem Leistenabschnitt auf. Der erste Teil der Begrenzungsmittel ist vorzugsweise an allen Zinken auf einer übereinstimmenden Höhe über dem Leistenabschnitt angeordnet. Dadurch bildet der erste Teil der Begrenzungsmittel einen zuverlässigen Abschluss des Aufnahmeraums.

In einer Ausführungsart ist der erste Teil der Begrenzungsmittel jeweils auf einander gegenüberliegenden Flächen des Grundabschnitts der Zinke angeordnet. Die ersten Begrenzungsmittel weisen auf dieser Zinke einen Versatz zueinander auf in einer Richtung, die quer zur Längsachse des Grundabschnitts verläuft. Dadurch können die Zinken der Kammleiste identisch aufgebaut sein, insbesondere können alle Zinken der Kammleiste identisch aufgebaut sein.

In einer Ausführungsart können die Begrenzungsmittel des ersten Teils der einander zugeordneten Begrenzungsmittel derart an dem Grundabschnitt der Zinken angeordnet sein, dass bei einem die Grundabschnitte benachbarter Zinken aufeinander zu bewegenden Auslenken der Zinken die ersten Begrenzungsmittel überhaupt nicht in Kontakt miteinander kommen, sondern beispielsweise erst das Anlegen eines ersten Begrenzungsmittels der einen Zinke an den Grundabschnitt der anderen Zinke einen Anschlag für das Auslenken der Zinken bildet. Alternativ hierzu können die ersten Begrenzungsmittel benachbarter Zinken sich beim Auslenken der Zinken überlappen, aber dennoch einen Anschlag für die Auslenkbewegung der Zinken bilden.

In einer Ausführungsart sind die einander zugeordneten ersten Begrenzungsmittel benachbarter Zinken im unausgelenkten Ausgangszustand der Grundabschnitte der Zinken nicht nur in Versatzrichtung voneinander beabstandet, sondern auch in einer Richtung quer zur Richtung des Versatzes, insbesondere in der Richtung, in der sich die ersten Begrenzungsmittel beim Auslenken der Zinken aufeinander zu bewegen. Dadurch ist das Einführen der Leitungen in den von den einander zugeordneten ersten Begrenzungsmittel zweier benachbarter Zinken begrenzten Aufnahmeraum vereinfacht.

In einer Ausführungsart begrenzt der erste Teil der Befestigungsmittel das dem Leistenabschnitt gegenüberliegenden Ende des Aufnahmeraums. Insbesondere ist der erste Teil der Befestigungsmittel nur an oder nahe einem dem Leistenabschnitt fernen Ende des Grundabschnitts der jeweiligen Zinke angeordnet. Dadurch bildet der erste Teil der Befestigungsmittel einen stabilen Abschluss der Kammleiste an ihrem von dem Leistenabschnitt fernen Ende der Zinke.

In einer Ausführungsart ist die lichte Weite des Aufnahmeraums durch den Abstand der Grundabschnitte zweier benachbarter Zinken bestimmt, insbesondere entspricht die lichte Weite dem Abstand der Grundabschnitte. Die Grundabschnitte können im Wesentlichen plattenförmig sein mit einer Erstreckung parallel zu den Leitungen, die mehr als 10 %, insbesondere mehr als 20 % und vorzugsweise mehr als 25 % und weniger als 75 % der Längserstreckung der Grundabschnitte beträgt. Dadurch ist die Führung und Fi- . xierung der Leitungen in dem Aufnahmeraum verbessert. Die einander zugewandten Flächen der Grundabschnitte benachbarter Zinken können auch konkav geformt sein.

Die Zinken weisen einen zweiten Teil einander zugeordneter Begrenzungsmittel auf, die vorzugsweise zwischen dem Leistenabschnitt und dem ersten Teil der Begrenzungsmittel angeordnet sind und den Aufnahmeraum in mindestens zwei, vorzugsweise unterschiedlich große Aufnahmekammern trennen. Beispielsweise kann eine erste, dem Leistenabschnitt nahe Aufnahmekammer eine Querschnittsfläche aufweisen, die mehr als 100 % und weniger als 250 %, insbesondere mehr als 120 % und weniger als 200 % der Querschnittsfläche einer zweiten Aufnahmekammer aufweist, die an dem von dem Leistenabschnitt fernen Ende des Aufnahmeraums angeordnet ist. Während die erste Aufnahmekammer durch den Leistenabschnitt, die Grundabschnitte der benachbarten Zinken sowie dem zweiten Teil der Begrenzungsmittel begrenzt ist, ist die erste Aufnahmekammer durch die Grundabschnitte der benachbarten Zinken sowie durch den ersten und zweiten Teil der Begrenzungsmittel begrenzt.

In einer Ausführungsart ist der zweite Teil der Begrenzungsmittel beim Einführen einer Leitung in den Aufnahmeraum, insbesondere in eine erste, dem Leistenabschnitt nahe Aufnahmekammer, federelastisch verformbar, insbesondere gegenüber dem Grundabschnitt der zugehörigen Zinke federelastisch auslenkbar. Dadurch ist ein Durchstecken der Leitungen von der zweiten in die erste Aufnahmekammer vereinfacht. Darüber hinaus ist eine sichere Fixierung der Leitungen in der ersten Aufnahmekammer gewährleistet.

Die von der Lamelle aufgespannte, im unverformten Ausgangszustand vorzugsweise plane Fläche schließt mit der Längsachse des Grundabschnitts der zugehörigen Zinke einen Winkel von weniger als 90° ein, insbesondere einen Winkel von weniger als 80° und vorzugsweise einen Winkel von mehr als 50°, aber weniger als 70°. Dadurch ist das Einführen der Leitung in die entsprechende Aufnahmekammer weiter vereinfacht und die Sicherung der Leitung in der entsprechenden Aufnahmekammer weiter verbessert.

In einer Ausführungsart erstreckt sich die Lamelle nur abschnittsweise entlang des Grundkörpers in einer Richtung, die quer zur Längsachse des Grundkörpers der zugehörigen Zinke verläuft. Die Lamelle erstreckt sich weniger als 80 %, insbesondere weniger als 70 % und vorzugsweise weniger als 60 %, aber mehr als 20 % in Richtung der Breite des Grundkörpers der Zinke.

Die Lamellen sind auf beiden Seiten von einem stirnseitigen Ende des Grundabschnitts der Zinke beabstandet, insbesondere auch mittig an dem Grundabschnitt angeordnet oder, wie im nachfolgenden Ausführungsbeispiel dargestellt, mit mindestens einem stirnseitigen Ende des Grundabschnitts der Zinke bündig abschließen. Dadurch ist das Einführen von Leitungen in die von den Lamellen begrenzte Aufnahmekammer vereinfacht und dennoch eine ausreichende Fixierung der Leitung gewährleistet.

Weitere Vorteile, Merkmale und Einzelheiten der Erfindung ergeben sich aus den Unteransprüchen und der nachfolgenden Beschreibung, in der unter Bezugnahme auf die Zeichnungen ein Ausführungsbeispiel im Einzelnen beschrieben ist. Dabei können die in den Ansprüchen und in der Beschreibung erwähnten Merkmale jeweils einzeln für sich oder in beliebiger Kombination erfindungswesentlich sein.
- Fig. 1: zeigt eine perspektivische Ansicht auf die Frontseite eines Montagesystems mit einer erfindungsgemäßen Kammleiste;
- Fig. 2: zeigt eine Frontansicht eines Ausführungsbeispiels einer erfindungsgemäßen Kammleiste 1;
- Fig. 3: zeigt eine Draufsicht auf die Kammleiste;
- Fig. 4: zeigt eine Seitenansicht der Kammleiste;
- Fig. 5: zeigt eine perspektivische Ansicht der Kammleiste; und
- Fig. 6: zeigt in vergrößerter Darstellung eine Frontansicht der Kammleiste mit eingelegten elektrischen Leitungen.

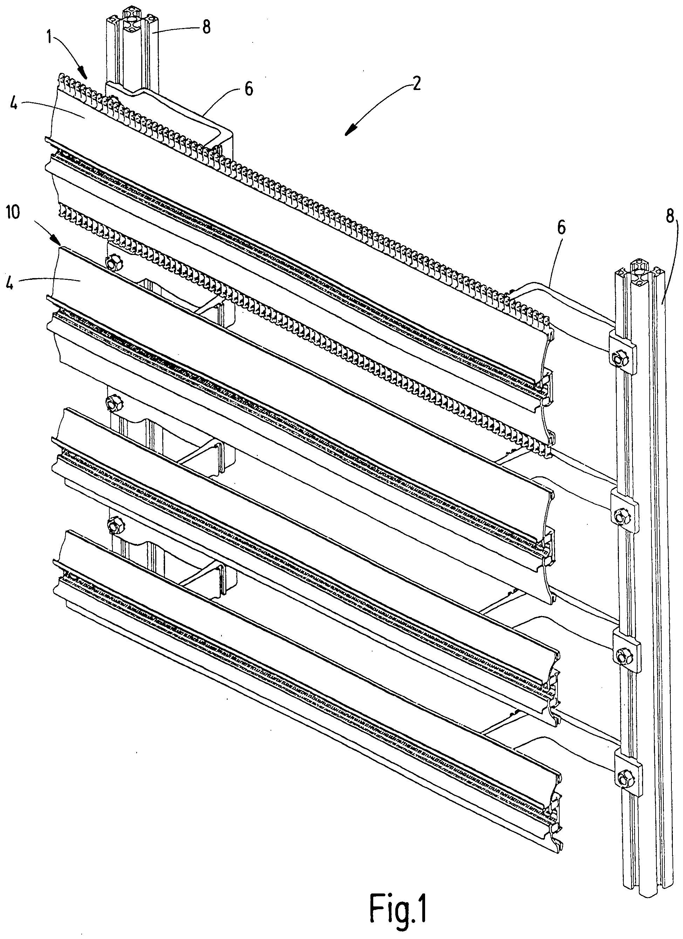

Die Fig. 1 zeigt eine perspektivische Ansicht auf die Vorderseite eines Montagesystems 2 für einen Schaltschrank, das beispielhaft vier horizontal verlaufende Montagestege 4 aufweist, an denen jeweils mindestens eine beispielsweise elektrische oder pneumatische Einrichtung anbringbar ist. Die Montagestege 4 erstrecken sich über eine Länge von beispielsweise zwischen 30 cm und 200 cm und sind an oder nahe ihren beiden Enden mittels jeweils eines Montagebügels 6 oder einem sonstigen Verbindungselement mit jeweils rechtwinklig zu den Montagestegen 4 und vorzugsweise vertikal verlaufenden Profilstäben 8 verbunden und bilden zusammen mit den Profilstäben 8 einen Montagerahmen, der vormontierbar ist und anschließend in dem in der Figur 1 dargestellten Zustand oder auch mit bereits daran angebrachten Einrichtungen und deren Verbindungsleitungen in einem Schaltschrank einsetzbar ist.

Die Montagestege 4 weisen entlang ihrer beiden Längsränder eine sich über die gesamte Länge erstreckende Aufnahmeeinrichtung 10 auf, in die erfindungsgemäße Kammleisten 1 einsteckbar sind, mit denen die Verbindungsleitungen der Einrichtungen von der Vorderseite des Montagesystems 2 geordnet auf die Rückseite des Montagesystems 2 führbar sind.

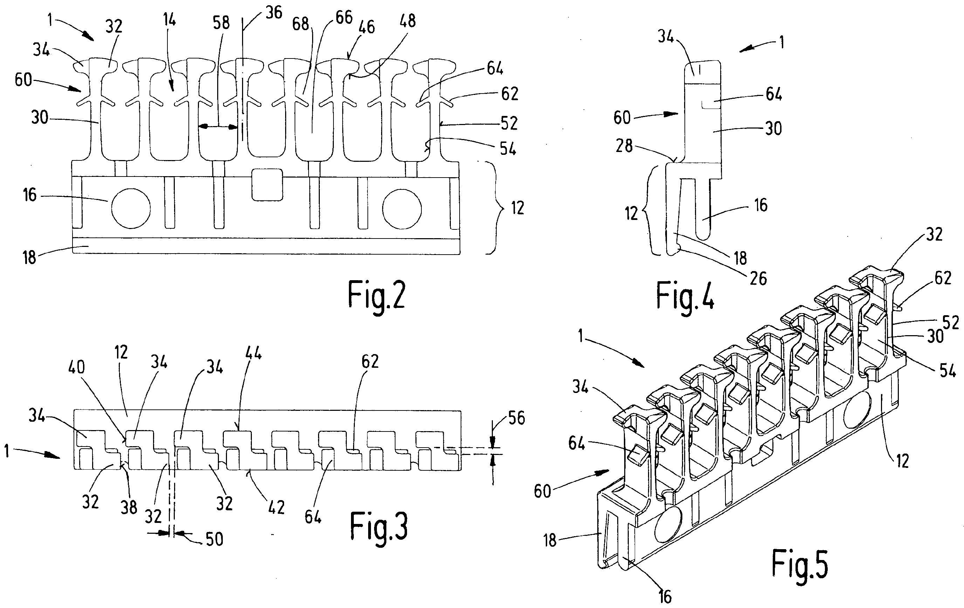

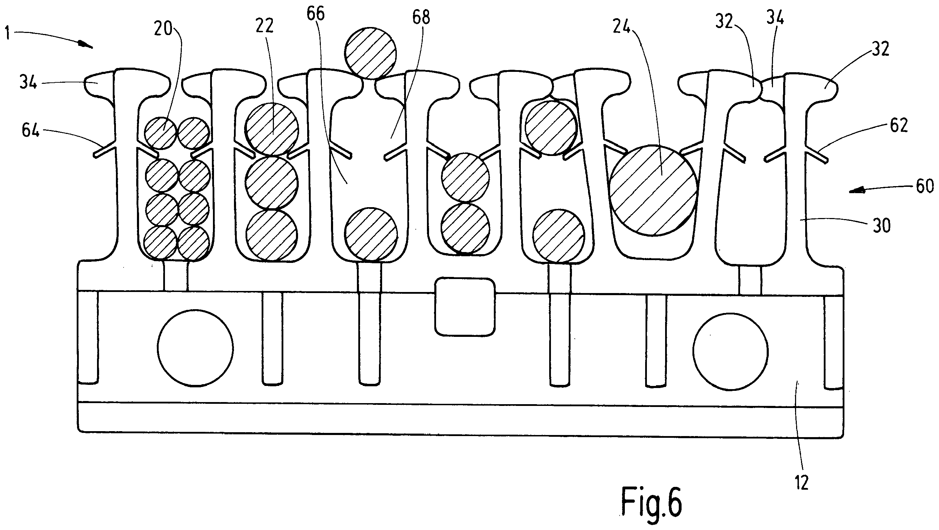

Die Fig. 2 zeigt eine Frontansicht eines Ausführungsbeispiels einer erfindungsgemäßen Kammleiste 1, die Fig. 3 zeigt eine zugehörige Draufsicht, die Fig. 4 eine zugehörige Seitenansicht und die Fig. 5 eine zugehörige perspektivische Ansicht. Die Fig. 6 zeigt in vergrößerter Darstellung eine Frontansicht der Kammleiste 1 mit eingelegten elektrischen Leitungen 20, 22, 24.

Die Kammleiste 1 weist einen Leistenabschnitt 12 und eine Vielzahl von Zinken 60 auf, die vorzugsweise alle identisch aufgebaut sind und beispielsweise aus Kunststoff einstückig mit dem Leistenabschnitt 12 ausgebildet sind. Die Zinken 60 erstrecken sich quer zu dem Leistenabschnitt 12. Zwischen jeweils zwei benachbarten Zinken 60 ist einen Aufnahmeraum 14 für die zu ordnenden Leitungen 20, 22, 24 (Fig. 6) gebildet. Der Leistenabschnitt 12 ist im Wesentlichen U-förmig mit zwei annähernd parallel verlaufenden Schenkeln 16, 18, wobei der erste Schenkel 16 in eine Nut der Aufnahmeeinrichtung 10 einsteckbar ist und dort mittels des zweiten Schenkels 18 im dargestellten Ausführungsbeispiel lösbar rastend festlegbar ist. In einem alternativen Ausführungsbeispiel ist die Kammleiste 1 unlösbar rastend an der Aufnahmeeinrichtung 10 und damit an dem Montagesteg 4 festlegbar, insbesondere kann ein beispielsweise hakenförmiger Rastabschnitt 26 des zweiten Schenkels 18 derart mit einem zugehörigen Rastmittel, insbesondere einer Aussparung, des Montagesteges 4 verrasten, dass die Kammleiste 1 nur mittels extrem hoher Kräfte oder sogar nur unter Zerstörung von der Aufnahmeeinrichtung 10 und damit von dem Montagesteg 4 lösbar ist.

Die Zinken 60 weisen einen ersten Teil einander zugeordneter Begrenzungsmittel 32, 34 auf, die einstückig von einem Grundabschnitt 30 der Zinke 60 ausgebildet sind. Die ersten Begrenzungsmittel 32, 34 sind an dem Grundabschnitt 30 in einer Richtung versetzt zueinander angeordnet sind, die im Ausführungsbeispiel rechtwinklig zur Längsachse 36 des Grundabschnitts 30 und rechtwinklig zur Längserstreckung des Leistenabschnitts 12 und damit senkrecht zur Zeichenebene der Fig. 2 verläuft. Die ersten Begrenzungsmittel 32, 34 sind dabei im dargestellten Ausführungsbeispiel bündig abschließend mit dem vorderen und hinteren stirnseitigen Ende 42, 44 der Zinke 60 angeordnet, wie insbesondere aus der Fig. 3 ersichtlich ist. In einem alternativen Ausführungsbeispiel kann mindestens ein Teil der ersten Begrenzungsmittel 32, 34 von dem vorderen und/oder hinteren stirnseitigen Ende 42, 44 der Zinke 60 beabstandet angeordnet sein. Die ersten Begrenzungsmittel 32, 34 sind im Wesentlichen übereinstimmend und insbesondere nockenförmig ausgebildet. Sie weisen an dem freien Ende der Zinke 60 eine Verrundung 46 zum vereinfachten und insbesondere selbstzentrierenden Einführen von Leitungen 20, 22, 24 in den Aufnahmeraum 14 auf. An einem dem Aufnahmeraum 14 zugewandten Ende weisen die ersten Begrenzungsmittel 32, 34 eine Verrundung 48 zum vereinfachten und insbesondere selbstzentrierenden Entnehmen der Leitungen 20, 22, 24 aus dem Aufnahmeraum 14. Die lichte Weite 58 des Aufnahmeraums 14 entspricht dem Abstand der Grundabschnitte 30 zweier benachbarter Zinken 60.

Durch den Versatz der ersten Begrenzungsmittel 32, 34 sind die Endflächen 38, 40 beim Auslenken benachbarter Zinken 60 aneinander vorbei bewegbar und bilden insbesondere keinen Anschlag für die Auslenkbewegung benachbarter Zinken 60. Unabhängig des Versatzes weisen die ersten Begrenzungsmittel 32, 34 in dem in der Fig. 3 dargestellten unausgelenkten Ausgangszustand einen Abstand 50 voneinander auf, wodurch das Einführen von einer Leitung 20, 22, 24 in den Aufnahmeraum 14 vereinfacht ist.

Die ersten Begrenzungsmittel 32, 34 sind jeweils auf einander gegenüberliegenden Flächen 52, 54 des Grundabschnitts 30 einer Zinke 60 angeordnet. Die Flächen 52, 54 der Grundabschnitte 30 können plan oder konkav sein. In dem in der Fig. 2 dargestellten Ausführungsbeispiel ist der Grundabschnitt 30 tailliert, insbesondere sind beide Flächen 52, 54 konkav. Dadurch ist nicht nur die Auslenkbarkeit des Grundabschnitts 30 und damit der Zinke 60 gegenüber dem Leistenabschnitt 12 für das Einsetzen von Leitungen 20, 22, 24 verbessert, sondern auch die Bruchsicherheit der Zinken 60 erhöht und bei entsprechender geometrischer Auslegung auch die Position der Biegestelle entlang der Längsachse 36 der Zinke 60 festlegbar. Die durch den Abstand der beiden Flächen 52, 54 bestimmte Dicke des Grundabschnitts 30 kann in Längsrichtung 36 unterschiedlich sein, insbesondere stufenlos variieren, und beispielsweise mehr als 3 %, aber weniger als 25 %, insbesondere weniger als 20 % und vorzugsweise weniger als 15 % der Längserstreckung des Grundabschnitts 30 betragen, im Ausführungsbeispiel zwischen 5 % und 15 %. Die Dicke des Grundabschnitts 30 kann an seinem dem Leistenabschnitt 12 nahen Ende weniger als 90 % der Dicke des Grundabschnitts 30 an seinem den ersten Begrenzungsmitteln 32, 34 nahen Ende betragen. In Richtung des Versatzes der ersten Begrenzungsmittel 32, 34 weisen diese einen Abstand 56 voneinander auf, durch den beim Auslenken der Zinken 60 ein reibungsloses Aneinandervorbeibewegen der ersten Begrenzungsmittel 32, 34 gewährleistet ist.

Die Zinken weisen einen zweiten Teil einander zugeordneter Begrenzungsmittel 62, 64 auf, die zwischen dem Leistenabschnitt und den ersten Begrenzungsmitteln 32, 34 angeordnet sind und den Aufnahmeraum 14 in eine erste, dem Leistenabschnitt 12 nahe und im Ausführungsbeispiel größere Aufnahmekammer 66 und eine zweite, dem Leistenabschnitt 12 ferne und im Ausführungsbeispiel kleinere Aufnahmekammer 68 trennen.

Die zweiten Begrenzungsmittel 62, 64 sind lamellenförmig und im unausgelenkten Ausgangszustand plan, wobei die Lamellen mit der Längsachse 36 des Grundabschnitts 30 der Zinke 60 einen Winkel von etwa 60° einschließen. Dadurch bilden die einander zugeordneten zweiten Begrenzungsmittel 62, 64 zweier benachbarter Zinken 60 einen Einführtrichter für die in die erste Aufnahmekammer 66 einzuführende Leitung 20, 22, 24. Gleichzeitig wird durch die Ausrichtung der zweiten Begrenzungsmittel 62, 64 eine sichere Fixierung der Leitung 20, 22, 24 in der ersten Aufnahmekammer 66 gewährleistet.

Die Erstreckung der zweiten Begrenzungsmittel 62, 64 in eine Richtung quer zur Längsachse 36 des Grundabschnitts 30, d. h. in der Darstellung der Fig. 4 die horizontale Erstreckung der zweiten Begrenzungsmittel 62, 64, beträgt mehr als 25 %, aber weniger als 75 % der Erstreckung des Grundabschnitts 30 in dieser Richtung, im Ausführungsbeispiel etwa 50 %.

Die Erstreckung des Grundabschnitts 30 in einer Richtung quer zur Längserstreckung des Leistenabschnitts 12 und quer zur Längsachse 36 des Grundabschnitts 30, d. h. in der Darstellung der Fig. 4 die horizontale Erstreckung oder Breite des Grundabschnitts 30, beträgt mehr als 50 %, aber weniger als 90 % der Erstreckung des Leistenabschnitts 12 in dieser Richtung, im Ausführungsbeispiel mehr als 60 % und weniger als 75 %; insbesondere ist die Breite der Zinken 60 geringer als die Breite des Leistenabschnitts 12.

Am Übergang vom Grundabschnitt 30 zum Leistenabschnitt 12 weist die Kammleiste 1 einen Absatz 28 auf, der vorzugsweise mindestens abschnittsweise rechtwinklig zur Längserstreckung des ersten Schenkel 16 und/oder zur Längsachse 36 des Grundabschnitts 30 verläuft. Dadurch ist die Montage der Kammleiste 1 vereinfacht, insbesondere ein automatisiertes oder halb-automatisiertes Einsetzen der Kammleiste 1 in die Aufnahmeeinrichtung 10 des Montagesteges 4. Die Länge der Zinken 60 entspricht dabei der Länge der Schenkel 16, 18 oder ist um bis zu 100 % größer. Dadurch ergibt sich eine sichere Festlegung bei gleichzeitig guten Gebrauchseigenschaften der Kammleiste 1.

Die Kammleiste 1 kann in unterschiedlichen Längen vorkonfektioniert sein, beispielsweise mit Leistenlängen von ganzzahligen Vielfachen von 50 mm, oder die Kammleiste 1 kann als quasi Endlosleiste ausgeführt sein und gegebenenfalls auch Sollbruchstellen zwischen zwei Zinken 60 für das Ablängen auf das jeweils gewünschte Maß aufweisen.

In der Fig. 6 ist eine Frontansicht einer erfindungsgemäßen Kammleiste 1 mit eingelegten Leitungen 20, 22, 24 mit teilweise unterschiedlichen Leitungsquerschnitten dargestellt. Es ist ersichtlich, dass die erfindungsgemäße Kammleiste 1 vielseitig einsetzbar ist. So sind beispielsweise mehrere erste elektrische Leitungen 20 eines ersten, vergleichsweise geringen Durchmessers in unterschiedlicher Anzahl in die größere erste Aufnahmekammer 66 und in die kleinere zweite Aufnahmekammer 68 einsetzbar. Entsprechendes gilt für zweite elektrische Leitungen 22 mit einem mittleren Durchmesser.

Auch das Einsetzen einer dritten elektrischen Leitung 24 mit einem Durchmesser, der größer ist als die lichte Weite 58 zwischen zwei Zinken 60, ist problemlos möglich, da sich die Zinken 60 elastisch auslenken lassen und dabei die ersten Begrenzungsmittel 32, 34 aneinander vorbeibewegbar sind, ohne einen Anschlag für die Auslenkbewegung der benachbarten Zinken 60 zu bilden. Dadurch ist es möglich, elektrische oder sonstige Leitungen mit verschiedenen Durchmessern und/oder mit unterschiedlichen Querschnittsformen einfach zu ordnen und sicher zu fixieren. Außerdem können durch die mehreren Aufnahmekammern 66, 68 des Aufnahmeraumes 14 unterschiedliche Verdrahtungsebenen gebildet werden, beispielsweise für Steuerleitungen einerseits und Energieversorgungsleitungen andererseits.

## Patentansprüche

1. Kammleiste (1) zum Ordnen von Leitungen (20, 22, 24), insbesondere zum Ordnen und Fixieren von elektrischen Leitungen (20, 22, 24) in Schaltschränken, wobei die Kammleiste (1) einen Leistenabschnitt (12) und eine Vielzahl von Zinken (60) aufweist, zwischen denen jeweils mindestens ein Aufnahmeraum (14) für die zu ordnenden Leitungen (20, 22, 24) gebildet ist, und wobei die Zinken (60) an einem mit dem Leistenabschnitt (12) verbundenen Grundabschnitt (30) angeordnete Begrenzungsmittel (32, 34, 62, 64) aufweisen, die den Aufnahmeraum (14) begrenzen, wobei der Grundabschnitt (30) der Zinken (60) gegenüber dem Leistenabschnitt (12) federelastisch auslenkbar ist zum Einführen einer Leitung (20, 22, 24) in den Aufnahmeraum (14), wobei mindestens ein erster Teil (32, 34) einander zugeordneter Begrenzungsmittel (32, 34, 62, 64) zweier benachbarter Zinken (60) versetzt zueinander an den einander zugewandten Flächen (52, 54) der benachbarten Zinken (60) angebracht ist, so dass beim Auslenken benachbarter Zinken (60) die Endflächen dieser Begrenzungsmittel (32, 34) aneinander vorbei bewegbar sind, und wobei ein zweiter Teil (62, 64) der Begrenzungsmittel (32, 34, 62, 64) die Form einer Lamelle aufweist, die in einem Aufnahmeraum (14) einander zugeordneten Lamellen (62, 64) benachbarter Zinken (60) keinen Versatz zueinander aufweisen, **dadurch gekennzeichnet dass** die Lamellen (62,64) auf beiden Seiten eines Grundabschnitts (30) einer Zinke an übereinstimmenden Positionen von dem Grundabschnitt (30) abstehen und den Aufnahmeraum (14) in mindestens zwei Aufnahmekammern (66,68) trennen.

2. Kammleiste (1) nach Anspruch 1, **dadurch gekennzeichnet, dass** der erste Teil (32, 34) der Begrenzungsmittel (32, 34, 62, 64) biegesteif und insbesondere nockenförmig ausgebildet ist.

3. Kammleiste (1) nach Anspruch 1 oder 2, **dadurch gekennzeichnet, dass** der erste Teil (32, 34) der Begrenzungsmittel (32, 34, 62, 64) einen übereinstimmenden Abstand zu dem Leistenabschnitt (12) aufweist.

4. Kammleiste (1) nach einem der vorangehenden Ansprüche, **dadurch gekennzeichnet, dass** der erste Teil (32, 34) der Begrenzungsmittel (32, 34, 62, 64) jeweils auf einander gegenüberliegenden Flächen (52, 54) des Grundabschnitts (30) der Zinke (60) angeordnet ist, und dass diese ersten Begrenzungsmittel (32, 34) auf der jeweiligen Zinke (60) einen Versatz zueinander in einer ersten Richtung aufweisen, die quer zur Längsachse (36) des Grundabschnitts (30) verläuft.

5. Kammleiste (1) nach einem der vorangehenden Ansprüche, **dadurch gekennzeichnet, dass** der erste Teil (32, 34) der Befestigungsmittel (32, 34, 62, 64) das dem Leistenabschnitt (12) gegenüberliegende Ende des Aufnahmeraums (14) begrenzt, insbesondere dass der erste Teil (32, 34) der Befestigungsmittel (32, 34, 62, 64) nur an oder nahe einem dem Leistenabschnitt (12) fernen Ende des Grundabschnitts (30) der jeweiligen Zinke (60) angeordnet ist.

6. Kammleiste (1) nach einem der vorangehenden Ansprüche, **dadurch gekennzeichnet, dass** die lichte Weite (58) des Aufnahmeraums (14) durch den Abstand der Grundabschnitte (30) zweier benachbarter Zinken (60) bestimmt ist.

7. Kammleiste (1) nach einem der vorangehenden Ansprüche, **dadurch gekennzeichnet, dass** die Lamellen (62,64) den Aufnahmeraum (14) in mindestens zwei unterschiedlich große Aufnahmekammern (66, 68) trennen.

8. Kammleiste (1) nach Anspruch 7, **dadurch gekennzeichnet, dass** der zweite Teil (62, 64) der Begrenzungsmittel (32, 34, 62, 64) beim Einführen einer Leitung (20, 22, 24) in den Aufnahmeraum (14) federelastisch verformbar ist, insbesondere gegenüber dem Grundabschnitt (30) der zugehörigen Zinke (60) federelastisch auslenkbar ist.

9. Kammleiste (1) nach Anspruch 7 oder 8, **dadurch gekennzeichnet, dass** die von der Lamelle aufgespannte, im unverformten Ausgangszustand vorzugsweise plane Fläche mit der Längsachse (36) des Grundabschnitts (30) der zugehörigen Zinke einen Winkel von weniger als 90° einschließt, insbesondere einen Winkel von weniger als 80° einschließt und vorzugsweise einen Winkel von mehr als 50° und weniger als 70° einschließt.

10. Kammleiste (1) nach Anspruch 9, **dadurch gekennzeichnet, dass** die Lamelle sich in einer Richtung, die quer zur Längsachse (36) des Grundkörpers (30) der zugehörigen Zinke (60) verläuft, nur abschnittsweise entlang des Grundkörpers (30) erstreckt.

## Claims

1. A comb bar (1) for organising lines (20, 22, 24), in particular for organising and fixing electrical lines (20, 22, 24) in switching cabinets, wherein the comb bar (1) has a bar portion (12) and a plurality of teeth (60), between which is formed at least one receiving space (14) for the lines (20, 22, 24) to be organised, and wherein the teeth (60) have delimiting means (32, 34, 62, 64) arranged at a base portion (30) connected to the bar portion (12) which delimiting means delimit the receiving space (14), wherein the base portion (30) of the teeth (60) can be deflected elastically vis-à-vis the bar portion (12) to introduce a line (20, 22, 24) into the receiving space (14), wherein at least one first part (32, 34) of associated delimiting means (32, 34, 62, 64) of two adjacent teeth (60) is mounted offset from the other on the two facing surfaces (52, 54) of the adjacent teeth (60), with the result that, when adjacent teeth (60) are deflected, the end surfaces of these delimiting means (32, 34) can be moved past one another, and wherein a second part (62, 64) of the delimiting means (32, 34, 62, 64) has the form of a fin, the adjoining teeth (60) of fins (62, 64) associated with one another in a receiving space (14) do not have an offset from one another, **characterised in that** the fins (62, 64) stick out from the base portion (30) on both sides of a base portion (30) of a tooth at matching positions and separate the receiving space (14) into at least two receiving chambers (66,68).

2. The comb bar (1) according to claim 1, **characterised in that** the first part (32, 34) of the delimiting means (32, 34, 62, 64) is designed to be rigid, and in particular cam-shaped.

3. The comb bar (1) according to claim 1 or 2, **characterised in that** the first part (32, 34) of the delimiting means (32, 34, 62, 64) is at a matching distance from the bar portion (12).

4. The comb bar (1) according to one of the preceding claims, **characterised in that** the first part (32, 34) of the delimiting means (32, 34, 62, 64) is respectively arranged on opposite surfaces (52, 54) of the base portion (30) of the tooth (60), and that, on the respective tooth (60), these first delimiting means (32, 34) have an offset from one another in a first direction which runs transverse to the longitudinal axis (36) of the base portion (30).

5. The comb bar (1) according to one of the preceding claims, **characterised in that** the first part (32, 34) of the fixing means (32, 34, 62, 64) delimits the end of the receiving space (14) opposite the bar portion (12), in particular that the first part (32, 34) of the fixing means (32, 34, 62, 64) is arranged only at or near to an end of the base portion (30) of the respective tooth (60) which is remote from the bar portion (12).

6. The comb bar (1) according to one of the preceding claims, **characterised in that** the clear span (58) of the receiving space (14) is determined by the distance between the base portions (30) of two adjacent teeth (60).

7. The comb bar (1) according to one of the preceding claims, **characterised in that** the fins (62, 64) separate the receiving space (14) into at least two receiving chambers (66, 68) of different size.

8. The comb bar (1) according to claim 7, **characterised in that** the second part (62, 64) of the delimiting means (32, 34, 62, 64) can be deformed elastically when a line (20, 22, 24) is introduced into the receiving space (14), in particular can be deflected elastically vis-à-vis the base portion (30) of the respective tooth (60).

9. The comb bar (1) according to claim 7 or 8, **characterised in that** the surface spanned by the fin, which surface is preferably planar in its deformed, original state, forms an angle of less than 90° with the longitudinal axis (36) of the base portion (30) of the respective tooth, in particular forms an angle of less than 80°, and preferably forms an angle of more than 50° and less than 70°.

10. The comb bar (1) according to claim 9, **characterised in that** the fin extends only partially along the base (30) in a direction which runs transverse to the longitudinal axis (36) of the base (30) of the respective tooth (60).

## Revendications

1. Peigne (1) pour ordonner des lignes (20, 22, 24), notamment pour ordonner et immobiliser des lignes (20, 22, 24) électriques dans des armoires électriques, le peigne (1) ayant une partie (12) de réglette et une pluralité de dents (60) entre lesquelles est formé, respectivement, au moins un espace (14) de réception des lignes (20, 22, 24) à ordonner, les dents (60) ayant des moyens (32, 34, 62, 64) de délimitation, qui sont disposés sur une partie (30) de base reliée à la partie (12) de réglette et qui délimitent l'espace (14) de réception, la partie (30) de base des dents (60) pouvant être déviée, en étant élastique comme un ressort, par rapport à la partie (12) de réglette pour introduire une ligne (20, 22, 24) dans l'espace (14) de réception, au moins une première partie (32, 34) de moyens (32, 34, 62, 64) de limitation, associés l'un à l'autre, de deux dents (60) voisines étant mises de manière décalée entre elles sur les surfaces (52, 54), tournées l'une vers l'autre, des dents (60) voisines, de manière à ce que, lorsque des dents (60) voisines sont déviées, les surfaces d'extrémité de ces moyens (32, 34) de limitation puissent se déplacer l'une devant l'autre, et une deuxième partie (62, 64) des moyens (32, 34, 62, 64) de limitation ayant la forme d'une lamelle, les lamelles (62, 64), associées l'une à l'autre dans un espace (14) de réception de dents (60) voisines, n'ayant pas de décalage les unes par rapport aux autres, **caractérisé en ce que** les lamelles (62, 64) des deux côtés d'une partie (30) de base d'une dent, en des positions en coïncidence, font saillie de la partie (30) de base et séparent l'espace (14) de réception en au moins deux chambres (60, 68) de réception.

2. Peigne (1) suivant la revendication 1, **caractérisé en ce que** la première partie (32, 34) des moyens (32, 34, 62, 64) de limitation est constituée de manière à résister à la flexion, en étant notamment en forme de bossage.

3. Peigne (1) suivant la revendication 1 ou 2, **caractérisé en ce que** la première partie (32, 34) des moyens (32, 34, 62, 64) de limitation a une distance, à la partie (12) de réglette, qui coïncide.

4. Peigne (1) suivant l'une des revendications précédentes, **caractérisé en ce que** la première partie (32, 34) des moyens (32, 34, 62, 64) de limitation est disposée, respectivement, sur des surfaces (52, 54) opposées l'une à l'autre de la partie (30) de base des dents (60) et **en ce que** ces premiers moyens (32, 34) de limitation ont, sur la dent (60) respective, un décalage l'un par rapport à l'autre dans une première direction, qui s'étend transversalement à l'axe (36) longitudinal de la partie (30) de base.

5. Peigne (1) suivant l'une des revendications précédentes, **caractérisé en ce que** la première partie (32, 34) des moyens (32, 34, 62, 64) de délimitation délimite l'extrémité, opposée à la partie (12) de réglette, de l'espace (14) de réception, notamment **en ce que** la première partie (32, 34) des moyens (32, 34, 62, 64) de délimitation n'est disposée que sur ou que près d'une extrémité, loin de la partie (12) de réglette, de la partie (30) de base de la dent (60) respective.

6. Peigne (1) suivant l'une des revendications précédentes, **caractérisé en ce que** l'ouverture (58) de l'espace (14) de réception est déterminée par la distance des parties (30) de base de deux dents (60) voisines.

7. Peigne (1) suivant l'une des revendications précédentes, **caractérisé en ce que** les lamelles (62, 64) séparent l'espace (14) de réception en au moins deux chambres (66, 68) de réception de dimensions différentes.

8. Peigne (1) suivant la revendication 7, **caractérisé en ce que** la deuxième partie (62, 64) des moyens (32, 34, 62, 64) de limitation peut, lors de l'introduction d'une ligne (20, 22, 24) dans l'espace (14) de réception, se déformer élastiquement comme un ressort, en pouvant notamment être déviée, élastiquement comme un ressort, par rapport à la partie (30) de base de la dent (60) associée.

9. Peigne (1) suivant la revendications 7 ou 8, **caractérisé en ce que** la surface, de préférence plane, à l'état initial non déformé, engendré par la lamelle, fait, avec l'axe (36) longitudinal de la partie (30) de base de la dent associée, un angle de moins de 90°, notamment un angle de moins de 80° et de préférence un angle de plus de 50° et de moins de 70°.

10. Peigne (1) suivant la revendication 9, **caractérisé en ce que** la lamelle s'étend dans une direction, qui est perpendiculaire à l'axe (36) longitudinal du corps (30) de base de la dent (60) associée, en ne s'étendant que par endroit le long du corps (30) de base.
